Europäisches Patentamt

European Patent Office

Office européen des brevets

(11) Veröffentlichungsnummer : **0 043 463**
**B1**

(12) **EUROPÄISCHE PATENTSCHRIFT**

(45) Veröffentlichungstag der Patentschrift :
05.10.83

(21) Anmeldenummer : 81104524.4

(22) Anmeldetag : 12.06.81

(51) Int. Cl.³ : **C 08 G 59/02, C 08 J 3/02,
C 08 L 63/00**

(54) **Verfahren zur Herstellung von wässrigen Epoxidharzdispersionen und deren Verwendung.**

(30) Priorität : 05.07.80 DE 3025609

(43) Veröffentlichungstag der Anmeldung :
13.01.82 Patentblatt 82/02

(45) Bekanntmachung des Hinweises auf die Patenterteilung : 05.10.83 Patentblatt 83/40

(84) Benannte Vertragsstaaten :
AT BE CH DE FR GB IT LI NL

(56) Entgegenhaltungen :
FR A 2 376 881
US A 3 129 133

(73) Patentinhaber : **BASF Aktiengesellschaft
Carl-Bosch-Strasse 38
D-6700 Ludwigshafen (DE)**

(72) Erfinder : **Wistuba, Eckehardt, Dr.
Im Obergarten 7
D-6702 Bad Duerkheim (DE)**

Jouve, 18, rue St-Denis, 75001 Paris, France

## Verfahren zur Herstellung von wäßrigen Epoxidharzdispersionen und deren Verwendung

Die vorliegende Erfindung betrifft ein Verfahren zur Herstellung wäßriger Epoxidharzdispersionen, wobei Epoxidharze in Gegenwart von Säuren mit stickstoffbasischen Schutzkolloiden umgesetzt und die Reaktionsprodukte durch Zugabe von Wasser dispergiert werden.

In den bisher bekannten Herstellverfahren für wäßrige Epoxidharzdispersionen werden oberflächenaktive Stoffe, wie anionische und kationische Verbindungen (US-PS 3 879 324) sowie nichtionogene Verbindungen, wie beispielsweise Mischungen aus Nonylphenoxypoly-(ethoxy)$_{19}$-ethanol und Alkylphenolpolyglykolethern mit 4 bis 9 Mol angelagerten Alkylenoxid (CA-PS 879 750), Poly-(ethylen-oxid)-ester von Fettsäuren (DE-OS 28 00 323) und Anlagerungsprodukte von 25 bis 30 Mol Alkylenoxid an Abietinsäure AT-PS 286 647, DE-AS 16 69 772) genannt, die die Epoxidharze in Wasser zu dispergieren vermögen.

Weiterhin werden folgende Dispergiermittel beschrieben :

Synthetische Verbindungen, Proteine (US-PS 3 020 250) und Amin-Epoxidharz-Kondensationsprodukte (US-PS 3 449 281, DE-OS 19 25 941).

Bekannt sind weiterhin Emulgatormischungen, die wie beispielsweise in der DE-AS 23 32 165 beschrieben, aus Abietinsäurepolyglykolester, Polyglykolethern von Fettsäuren und/oder Polyglykolethern von p-Alkylphenol und langkettiger aliphatischer Alkohole mit 8 bis 18 Kohlenstoffatomen bestehen. Herstellverfahren für wäßrige Dispersionen, bei denen der zu dispergierende Stoff mit dem Dispergiermittel zunächst in einem organischen Lösungsmittel gelöst wird, das dann nach Zugabe von Wasser abdestilliert wird, sind ebenfalls bekannt (US-PS 3 905 929, US-PS 3 935 146, DE-OS 25 37 207, DE-OS 25 07 884, DE-OS 25 07 842).

Keine der oben genannten Verfahren zur Herstellung wäßriger Epoxidharzdispersionen befriedigt alle Ansprüche. So wird beim Einsatz geringer Mengen der oben beschriebenen Emulgatoren und Schutzkolloide die Entmischung der Epoxidharzdispersionen beobachtet, d. h. das dispergierte Epoxidharz sedimentiert. Bei zu hoher Dosierung der Dispergierhilfsmittel wird die Wasserbeständigkeit der auf Basis dieser Epoxidharzdispersionen formulierten Beschichtungen — dies betrifft besonders die bei Raumtemperatur härtenden Systeme — beeinträchtigt.

Aufgabe der vorliegenden Erfindung ist es, mit Hilfe reaktiver einbaubarer Schutzkolloide stabile wäßrige Dispersionen von Epoxidharzen aufzuzeigen.

Es wurde gefunden, daß bestimmte, basische Stickstoffgruppen enthaltende Copolymerisate als Schutzkolloide zur Herstellung wäßriger Epoxidharzdispersionen besonders geeignet sind.

Gegenstand der vorliegenden Erfindung ist ein Verfahren zur Herstellung wäßriger Epoxidharzdispersionen mit Wassergehalten von 40 bis 75 Gew.%, das dadurch gekennzeichnet ist, daß

(A) ein Epoxidharz mit mehr als einer 1,2-Epoxidgruppe pro Molekül mit

(B) 1 bis 30 Gew.%, bezogen auf Epoxidharz (A), eines stickstoffbasischen Schutzkolloids mit einer Aminzahl von 10 bis 90 in Gegenwart von

(C) 50 bis 1 000 Molprozent der auf den basischen Stickstoff des Schutzkolloids (B) bezogenen Menge einer Säure,

sowie gegebenenfalls eines oder mehrerer organischer Lösungsmittel bei Temperaturen von 50 bis 150 °C umgesetzt, das Reaktionsprodukt durch Zugabe von Wasser dispergiert und, sofern organisches Lösungsmittel vorhanden ist, dieses destillativ entfernt wird.

Als stickstoffbasische Schutzkolloide (B) kommen insbesondere Copolymerisate mit K-Werten zwischen 20 und 60 zur Verwendung, die neben Vinylpropionat und Vinylpyrrolidon Vinylimidazol, Vinylpyridin und/oder Dimethylaminoethyl-(meth-)acrylat sowie gegebenenfalls bis zu 35 Gew.% weitere copolymerisierbare ethylenisch ungesättigte Verbindungen einpolymerisiert enthalten.

Gegenstand der vorliegenden Erfindung ist außerdem die Verwendung der erfindungsgemäß hergestellten wäßrigen Epoxidharzdispersionen zur Herstellung von Überzügen.

Als ein bedeutender Vorteil der erfindungsgemäßen wäßrigen Epoxidharzdispersionen im Vergleich zu den Epoxidharzlösungen ist, bedingt durch die Abwesenheit von Lösungsmitteln, die Umweltfreundlichkeit dieser wäßrigen Systeme zu nennen. Gegenüber den Epoxidharzdispersionen des bekannten Standes der Technik zeichnen sich die nach dem erfindungsgemäßen Verfahren hergestellten durch eine erhöhte Stabilität der Dispersion aus. Weiterhin weisen die gehärteten Lacksysteme eine sehr gute Wasserbeständigkeit auf.

Zum erfindungsgemäßen Herstellverfahren und den dafür verwendeten Einsatzstoffen ist im einzelnen folgendes auszuführen.

(A) Als Epoxidharze (A) mit mehr als einer 1,2-Epoxidgruppe pro Molekül kommen übliche Epoxidharze in Frage, beispielsweise solche mit 2, 3 und gegebenenfalls mehr Epoxidgruppen pro Molekül sowie Gemische derartiger Polyepoxide. Geeignete Epoxidharze sind beispielsweise solche auf Basis von Umsetzungsprodukten des Epichlorhydrins mit Bisphenol A (z. B. ®Epikote der Fa. Shell) oder die Epoxide mehrfach ungesättigter Kohlenwasserstoffe (Dicyclopentadien, Cyclohexadien) und Epoxiäther mehrwertiger Alkohole die im allgemeinen Molekulargewichte zwischen 300 und 3 000 und Epoxidwerte zwischen 0,65 und 0,1 aufweisen. Geeignet sind auch Gemische derartiger Polyepoxide mit Monoepoxiden.

(B) Als stickstoffbasische Schutzkolloide (B) kommen solche mit Aminzahlen von 10 bis 90, vorzugsweise 20 bis 45 in Betracht. Geeignet sind insbesondere Copolymerisate mit K-Werten (nach Fikentscher) zwischen 20 und 70. Für das erfindungsgemäße Herstellverfahren werden die stickstoffbasischen Schutzkolloide (B) in Mengen von 1 bis 30, vorzugsweise 5 bis 20 Gew.%, bezogen auf Epoxidharz (A) eingesetzt.

Als stickstoffbasische Schutzkolloide werden bevorzugt mit Vinylimidazol, Vinylpyridin und/oder Dimethylaminoethyl(meth)acrylat modifizierte Vinylpropionat-Vinylpyrrolidon-Copolymerisate mit K-Werten von 20 bis 60, bevorzugt 25 bis 45, eingesetzt. Das Verhältnis Vinylpropionat : Vinylpyrrolidon beträgt vorzugsweise 1 : 8 bis 8 : 1, insbesondere 1 : 2. Im Copolymerisat können das Vinylpropionat ganz oder teilweise durch Vinylacetat und das Vinylpyrrolidon zu 50 % und weniger durch Vinylcaprolactam ersetzt werden.

Der Anteil der basischen Stickstoffverbindungen, wie Vinylimidazol, Dimethylaminoethyl(meth)acrylat und Vinylpyridin, ergibt sich aus der Aminzahl des Schutzkolloids, die 10 bis 90, bevorzugt 20 bis 45, beträgt.

Gegebenenfalls können im stickstoffbasischen Schutzkolloid (B) bis zu 35 Gew.% weitere ethylenisch ungesättigte Verbindungen, wie beispielsweise (Meth)acrylamid, (Meth)acrylsäure, (Meth)acrylsäureester der $C_1$-$C_{18}$-Alkohole mit einpolymerisiert sein.

Die Herstellung der einbaubaren stickstoffbasischen Schutzkolloide erfolgt im allgemeinen nach üblichen Polymerisationsverfahren, beispielsweise durch Lösungspolymerisation in Wasser, oder organischen Lösungsmitteln, wie Alkoholen, wie z. B. tert.-Butanol, Polyolen, wie z. B. Glykol und Glycerin, Etherolen, wie Monoalkyldiolen, wie z. B. Butylglykol, Propylglykol, Ethylglykol und Methylglykol, Diethylen-glykolmono-n-butylether, Ethern, wie z. B. Dialkyldiolen, wie Diethylenglykoldiethylether, Ketonen und Estern.

Zur Herstellung der erfindungsgemäßen Epoxidharzdispersionen werden vorzugsweise wasserverdünnbare Schutzkolloidlösungen verwandt.

(C) Als Säuren (C) können sowohl anorganische Säuren, wie Salzsäure, Schwefelsäure, Phosphorsäure, als auch organische Säuren, wie Carbonsäuren und Sulfonsäuren für das erfindungsgemäße Verfahren verwendet werden. Bevorzugt sind Carbonsäuren, wie $C_1$-$C_3$-Carbonsäuren, z. B. Ameisensäure, Essigsäure und Propionsäure, Dicarbonsäuren, wie Oxalsäure und Maleinsäure, Hydroxycarbonsäuren, wie Oxalsäure und Maleinsäure, Hydroxycarbonsäuren, wie Milchsäure und Weinsäure und Dicarbonsäurehalbester, wie Maleinsäuremonomethylester, Bernsteinsäuremonotriethylglykol-Ester, Maleinsäuremono-octaethylenglykol-ester und Bernsteinsäuremono-(triethylenglkyolmono-n-butylether)-ester. Erfindungsgemäß werden 50 bis 1 000, vorzugsweise 100 bis 500 Molprozent der auf den basischen Stickstoff des Schutzkolloids (B) bezogenen Menge der Komponente (C) eingesetzt.

Die säurekatalysierte Reaktion zwischen Epoxidharz (A) und einbaubarem stickstoffbasischem Schutzkolloid wird bei Temperaturen von 50 bis 150, vorzugsweise 65 bis 95 °C, in der Schmelze oder in Lösungsmitteln, deren Siedepunkte unter 160 °C liegen, wie aliphatischen, cyclischen und aromatischen Kohlenwasserstoffen, halogenierten Kohlenwasserstoffen, Alkoholen, Ketonen und Estern oder Gemischen dieser Lösungsmittel durchgeführt. Die Reaktionszeit liegt je nach der Temperatur im allgemeinen zwischen 10 Minuten und 4 Stunden und kann über die Bestimmung der Säurezahl ermittelt werden.

Die erhaltenen Epoxidharzdispersionen sind stabil und können mehrere Monate lang ohne Zersetzung aufbewahrt werden.

Die erfindungsgemäßen Epoxidharzdispersionen können zur Beschichtung von Papier, Textilien, Kunststoffen, Beton, Straßen und Metallen dienen.

Den erfindungsgemäßen Epoxidharzdispersionen können Härtungsmittel wie Amine und Polyaminoamide, Farbstoffe, Füllstoffe, Pigmente und Lösungsmittel zugesetzt werden.

Besonders vorteilhaft werden die erfindungsgemäßen Epoxidharzdispersionen bei der Formulierung wäßriger Lacksysteme, wie z. B. Elektrotauchlacken, Coil-coating-Lacken und Tonbandbeschichtungen eingesetzt. Die mit den Epoxidharzdispersionen hergestellten Überzugsmassen sind in ihren physikalischen Eigenschaften, Haftung, Aussehen usw. den herkömmlichen Überzugsmassen in organischen Lösungsmitteln ebenbürtig. Gleiches gilt für die Wasserbeständigkeit der bei Raumtemperatur getrockneten Überzüge.

Die in den Beispielen angegebenen Teile und Prozente sind, soweit nicht anders angegeben, Gewichtsteile bzw. Gewichtsprozente.

Beispiel 1

285 Teile Epoxidharz (auf Basis von Bisphenol A und Epichlorhydrin) mit einem mittleren Molekulargewicht von 370 und einem Epoxidwert von 0,52 werden mit 52,8 Teilen einer 51,7 %igen Schutzkolloidlösung in Butylglykol bestehend aus einem Polymeren der Zusammensetzung 30 Teile Vinylpropionat, 60 Teilen Vinylpyrrolidon und 10 Teilen Vinylimidazol mit einem K-Wert nach DIN 53 726 von 40,8 und einer Aminzahl von 30 unter Rühren mit 9 Teilen Eisessig versetzt und auf 80 °C erhitzt. Nach 45 Minuten beträgt die Säurezahl O. Zu dem Reaktionsgemisch werden 300 Teile Methylethylketon gegeben. Nach 10 Minuten werden innerhalb von 45 Minuten 558 Teile destilliertes Wasser in das Reaktionsgemisch getropft und das Methylethylketon im Vakuum gleichzeitig abdestilliert. Die so erhaltene Epoxiddispersion hat einen Festgehalt von 43,3 % und einen Epoxidwert von 0,18.

**Beispiel 2**

43 Teile der Epoxidharzdispersion aus Beispiel 1 werden mit 65 Teilen einer 33 %igen wäßrigen Dispersion eines Polyaminoamids auf Basis von Ölsäure und Diethylentriamin mit einer Aminzahl von 200 bis 300 und eines H-aktiv-Äquivalentes von 155 bis 160 abgemischt, auf Stahlblech aufgezogen, 15 Minuten bei Raumtemperatur vorgetrocknet und bei 150 °C gehärtet. Die Prüfergebnisse sind in der folgenden Tabelle angegeben.

Prüfergebnisse der mit Härter (Polyaminoamid) versetzten Epoxidharzdispersion :

Stabilität der Abmischung : sehr gut, keine Entmischung

Benetzbarkeit des Stahlblechs : gut

Pendelhärte bei den angegebenen Härtungsbedingungen :

Raumtemperatur 48 Stdn. : 115 sec
        150 °C    30 Min. : 175 sec
        150 °C    60 Min. : 185 sec

12 stündige Lagerung in Wasser : Es wurden keine Veränderungen der Lackfilme beobachtet.

**Ansprüche**

1. Verfahren zur Herstellung wäßriger Epoxidharzdispersionen mit Wassergehalten von 40 bis 75 Gew.%, dadurch gekennzeichnet, daß

(A) ein Epoxidharz mit mehr als einer 1,2-Epoxidgruppe pro Molekül mit

(B) 1 bis 30 Gew.%, bezogen auf Epoxidharz (A), eines stickstoffbasischen Schutzkolloids mit einer Aminzahl von 10 bis 90,
in Gegenwart von

(C) 50 bis 1 000 Molprozent der auf den basischen Stickstoff des Schutzkolloids (B) bezogenen Menge einer Säure,
sowie gegebenenfalls eines oder mehrerer organischer Lösungsmittel bei Temperaturen von 50 bis 150 °C umgesetzt, das Reaktionsprodukt durch Zugabe von Wasser dispergiert und, sofern organisches Lösungsmittel vorhanden ist, dieses destillativ entfernt wird.

2. Verfahren nach Anspruch 1, dadurch gekennzeichnet, daß als Komponente (B) ein stickstoffbasisches Schutzkolloid mit einer Aminzahl von 20 bis 45 verwendet wird.

3. Verfahren nach Anspruch 1 oder 2, dadurch gekennzeichnet, daß als stickstoffbasisches Schutzkolloid (B) Copolymerisate mit K-Werten zwischen 20 und 60 verwendet werden, die neben Vinylpropionat und Vinylpyrrolidon Vinylimidazol, Vinylpyridin und/oder Dimethylaminoethyl(meth)acrylat sowie gegebenenfalls bis zu 35 Gew.% weitere copolymerisierbare ethylenisch ungesättigte Verbindungen einpolymerisiert enthalten.

4. Verfahren nach Anspruch 1, 2 oder 3, dadurch gekennzeichnet, daß als stickstoffbasisches Schutzkolloid (B) ein Copolymerisat verwendet wird, das Vinylpropionat und Vinylpyrrolidon im Gewichtsverhältnis 1 : 8 bis 8 : 1 einpolymerisiert enthält.

5. Verfahren nach Anspruch 3 oder 4, dadurch gekennzeichnet, daß als stickstoffbasisches Schutzkolloid (B) ein Copolymerisat verwendet wird, dessen Vinylpropionateinheiten zumindest teilweise durch Vinylacetat-einheiten ersetz sind und dessen Vinylpyrrolidoneinheiten bis zu 50 Gew.% durch Vinylcaprolactam ersetzt sind.

6. Verwendung der nach einem der vorhergehenden Ansprüche hergestellten wäßrigen Epoxidharzdispersionen zur Herstellung von Überzügen.

**Claims**

1. A process for the preparation of an aqueous epoxy resin dispersion containing from 40 to 75 % by weight of water, wherein

(A) an epoxy resin having more than one 1,2-epoxide group per molecule is reacted with

(B) from 1 to 30 % by weight, based on the epoxy resin (A), of a protective colloid which contains basic nitrogen and has an amine number of from 10 to 90,
in the presence of

(C) from 50 to 1,000 mole per cent, relative to the amount of basic nitrogen in the protective colloid (B), of an acid,
and in the presence or absence of one or more organic solvents, at from 50 to 150 °C, the reaction product is dispersed by adding water, and any organic solvent present is then distilled off.

2. A process as claimed in claim 1, wherein component (B) is a protective colloid containing basic nitrogen and having an amine number from 20 to 45.

3. A process as claimed in claim 1 or 2, wherein the protective colloid (B), containing basic nitrogen, is a copolymer which has a K value of from 20 to 60 and which contains, as copolymerized units, vinyl propionate and vinylpyrrolidone as well as vinylimidazole, vinylpyridine and/or dimethylaminoethyl acrylate or methacrylate, with or without up to 35 % by weight of other copolymerizable ethylenically unsaturated compounds.

4. A process as claimed in claim 1, 2 or 3, wherein the protective colloid (B), containing basic nitrogen, is a copolymer which contains vinyl propionate and vinylpyrrolidone as copolymerized units in a weight ratio of from 1 : 8 to 8 : 1.

5. A process as claimed in claim 3 or 4, wherein the protective colloid (B), containing basic nitrogen, is a copolymer wherein the vinyl propionate units have been replaced at least partially by vinyl acetate units and wherein the vinylpyrrolidone units have been replaced to the extent of up to 50 % by weight by vinylcaprolactam.

6. The use of an aqueous epoxy resin dispersion, obtained according to any of the preceding claims, for the production of coatings.

**Revendications**

1. Procédé de préparation de dispersions aqueuses de résine époxy, à teneur en eau de 40 à 75 % en poids, caractérisé par le fait qu'on fait réagir à des températures de 50 à 150 °C :

(A) une résine époxy ayant plus d'un groupe 1, 2-époxyde par molécule avec

(B) 1 à 30 % en poids, rapportés à la résine époxy (A), d'un colloïde protecteur basique azoté, d'un indice d'amine de 10 à 90,
en présence de

(C) 50 à 1 000 % (moles) de la quantité, rapportée à l'azote basique du colloïde protecteur (B), d'un acide,
on disperse le produit de réaction par addition d'eau et, dans la mesure où est présent un solvant organique, on élimine ce dernier par distillation.

2. Procédé selon la revendication 1, caractérisé par le fait qu'on utilise, comme composant (B), un colloïde protecteur basique azoté, d'un indice d'amine de 20 à 45.

3. Procédé selon la revendication 1 ou 2, caractérisé par le fait qu'on utilise, comme colloïde protecteur basique, azoté (B), des copolymères d'indice K compris entre 20 et 60, qui contiennent, à l'état polymérisé, outre du propionate de vinyle et de la vinylpyrrolidone, du vinylimidazole, de la vinylpyridine, et/ou du diméthylaminoéthyl(méth)acrylate ainsi qu'éventuellement, jusqu'à 35 % en poids d'autres composés à insaturation éthylénique, copolymérisables.

4. Procédé selon la revendication 1, 2 ou 3, caractérisé par le fait qu'on utilise, comme colloïde protecteur basique azoté (B), un copolymère qui contient, à l'état polymérisé, du propionate de vinyle et de la vinylpyrrolidone en rapport en poids de 1/8 à 8/1.

5. Procédé selon la revendication 3 ou 4, caractérisé par le fait qu'on utilise, comme colloïde protecteur basique, azoté (B), un copolymère dont ses motifs propionate de vinyle sont remplacés, au moins partiellement, par des motifs acétate de vinyle et dont les motifs vinylpyrrolidone sont remplacés jusqu'à 50 % en poids par du vinylcaprolactame.

6. Utilisation des dispersions aqueuses de résine époxy préparées selon l'une des revendications précédentes pour la fabrication d'enduits.